# EUROPÄISCHE PATENTANMELDUNG

(11) **EP 1 014 245 A1**
(43) Veröffentlichungstag der Anmeldung: **28.06.2000**
(21) Anmeldenummer: 99125258.6
(22) Anmeldetag: 17.12.1999
(51) Int. Cl.: G05D 16/06, F17C 13/04

(54) **Flaschenventil mit Druckminderfunktion**

(30) Priorität: 18.12.1998 DE 19858746; 08.04.1999 DE 19915860; 08.04.1999 EP 99106956
(71) Anmelder: Linde Technische Gase GmbH, 82049 Höllriegelskreuth (DE)
(72) Erfinder: Meinass, Helmut, Dipl.-Ing., 82538 Geretsried (DE); Mair, Herman, Dipl.-Ing., 81547 München (DE)
(74) Vertreter: Gellner, Bernd

(57) **Zusammenfassung**

Die Erfindung betrifft eine Flaschenverschlußvorrichtung (11) für eine Druckgasflasche (1) mit einem Schließelement (71) und einem Betätigungselement (5) zum Betätigen des Schließelementes (71). Das Schließelement (71) wird dabei entweder in eine die Öffnung der Gasflasche (1) verschließende oder in eine die Öffnung der Gasflasche (1) freigebende Position gebracht. In die Flaschenverschlußvorrichtung (11) ist eine Vorrichtung zur Druckminderung integriert ist, welche mittels des Betätigungselementes (5) aktivierbar ist .

## Beschreibung

Die Erfindung betrifft eine Flaschenverschlußvorrichtung für eine Druckgasflasche mit einem Schließelement und einem Betätigungselement zum Betätigen des Schließelementes, wobei das Schließelement in eine die Öffnung der Gasflasche verschließende und eine die Öffnung der Gasflasche freigebende Position bringbar ist.

Bei den üblichen Gasflaschenarmaturen ist in den Flaschenkopf ein Flaschenventil zum Öffnen und Schließen der Flasche eingeschraubt. Mit dem Flaschenventil wird ein Druckminderer verbunden, an den sich ein Gasentnahmestutzen anschließt. In der Regel sind noch Manometer für den Flaschendruck und den Verbrauchsdruck vorgesehen. Der Druck des an dem Gasentnahmestutzen entnommenen Gases, der Verbrauchsdruck, ist in bestimmten Grenzen vom momentanen Flaschendruck abhängig. Diese Abhängigkeit ist, insbesondere bei Gasanwendungen, bei denen ein sehr stabiler Druck sichergestellt werden muß, von Nachteil.

Aufgabe vorliegender Erfindung ist es daher, eine Flaschenverschlußvorrichtung zu entwickeln, die die oben genannten Nachteile vermeidet.

Diese Aufgabe wird erfindungsgemäß dadurch gelöst, daß in die Flaschenverschlußvorrichtung eine Vorrichtung zur Druckminderung integriert ist, welche mittels des Betätigungselementes aktivierbar ist.

Die Kombination einer Flaschenverschlußvorrichtung und einer Vorrichtung zur Druckminderung zu einem Element stellt eine preiswerte und platzsparende Lösung für die beiden Funktionen "Verschließen bzw. Öffnen der Flasche" und "Minderung bzw. Vorminderung des Druckes" dar.

Vorzugsweise wird an die erfindungsgemäße Flaschenverschlußvorrichtung ein zweiter Druckminderer angeschlossen. Die gesamte Gasflaschenarmatur erhält damit eine zweistufige Druckreduzierung. Zunächst wird der Gasflaschendruck mit der in der Flaschenverschlußvorrichtung integrierten Vorrichtung zur Druckminderung reduziert, anschließend mit dem zweiten Druckminderer auf den von dem an dem Gasentnahmeanschluß angeschlossenen Verbraucher geforderten Verbrauchsdruck verringert. Der Verbrauchsdruck kann somit genauer geregelt werden und ist vom momentanen Flaschendruck im wesentlichen unabhängig.

Mit der integrierten Vorrichtung zur Druckminderung wird vorzugsweise eine Druckerniedrigung auf 10 bis 40 bar, besonders bevorzugt auf 20 bis 30 bar, erreicht.

Von Vorteil wird das Schließelement in der die Öffnung der Gasflasche verschließenden Position von einer Kraft gehalten, die unabhängig von der an dem Betätigungselement angreifenden Kraft ist. D.h. das Schließelement verschließt die Gasflasche immer genauso dicht, unabhängig von der Kraft, mit der ein Benutzer beispielsweise das Ventilrad der Flaschenverschlußvorrichtung zudreht. Dadurch werden zum einen Beschädigungen an dem Schließelement oder an Dichtungen vermieden, die ansonsten auftreten können, wenn der Benutzer mit Gewalt versucht, die Flasche zu verschließen. Zum anderen ist sichergestellt, daß auch mit geringem Kraftaufwand ein absolut sicherer Verschluß der Flasche erreicht wird, da die Schließfunktion unabhängig von der an dem Betätigungselement angreifenden Kraft ist.

In einer einfachen und günstigen Ausgestaltung besitzt das Betätigungselement genau zwei Einstellpositionen. Durch Betätigen des Betätigungselementes wird das Schließelement entweder in die Position "offen" oder in die Stellung "geschlossen" gebracht. Wenn das Schließelement die Öffnung der Gasflasche freigibt, wird der in der Gasflasche herrschende Flaschendruck mittels des in die Flaschenverschlußvorrichtung integrierten Druckminderers automatisch reduziert.

Es hat sich als besonders vorteilhaft erwiesen, wenn der Grad der Druckminderung mittels des Betätigungselementes einstellbar ist. Durch das Betätigungselement der Flaschenverschlußvorrichtung wird somit einerseits die Gasflasche verschlossen oder geöffnet, andererseits bei geöffneter Gasflasche eingestellt, wie stark der Flaschendruck gemindert wird.

Der Betätigungswinkel des Betätigungsknopfes der Flaschenverschlußvorrichtung beträgt von Vorteil nicht mehr als 270°, bevorzugt nicht mehr als 180°, besonders bevorzugt nicht mehr als 150°. Der geringe Betätigungswinkel ermöglicht ein schnelles Öffnen und Schließen der Flaschenverschlußvorrichtung. Dadurch werden sowohl der Bedienkomfort als auch die Sicherheit des Gesamtsystems erhöht. Im Gefahrenfall kann die Flasche mir einem schnellen Handgriff verschlossen werden.

Vorzugsweise rastet der Betätigungsknopf der Flaschenverschlußvorrichtung in seinen Endpositionen "Flasche offen" und "Flasche geschlossen" ein.

Sowohl aus Platzgründen als auch aus ergonomischer Sicht hat sich ein Drehknopf zur Betätigung der Flaschenverschlußvorrichtung als günstig erwiesen.

Die Erfindung sowie weitere Einzelheiten der Erfindung werden im folgenden anhand von in den Zeichnungen dargestellten Ausführungsbeispielen näher erläutert Hierbei zeigen:
- Figur 1: eine Ausführungsform der erfindungsgemäßen Gasflaschenarmatur,
- Figur 2: einen Schnitt entlang der Linie K-L-M in Figur 1.

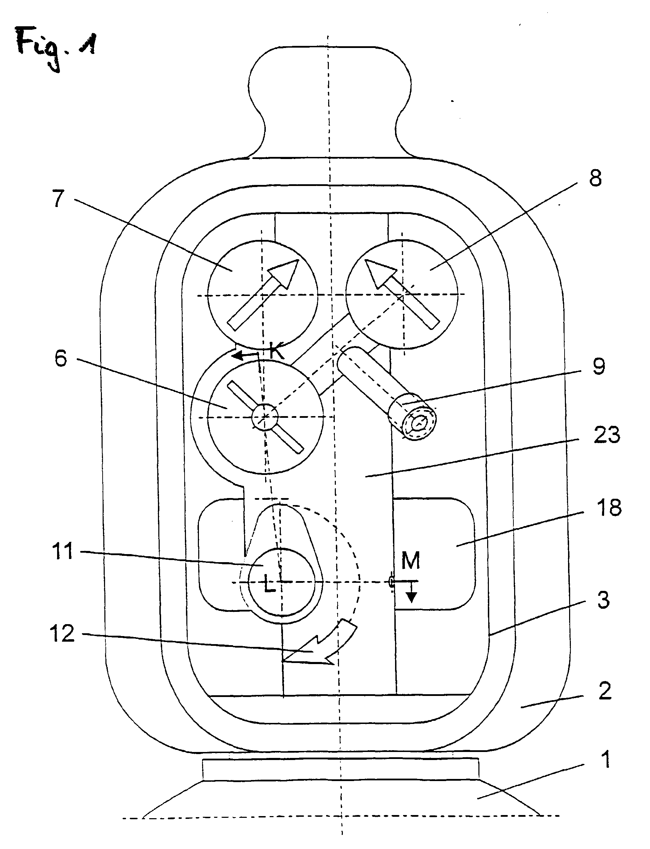

In Figur 1 ist eine Gasflaschenarmatur mit der erfindungsgemäßen Flaschenverschlußvorrichtung schematisch in der Vorderansicht dargestellt. Die auf dem Kopf der Gasflasche 1 angebrachten Armaturen sind durch eine Schutzkappe 2 gegen Beschädigungen geschützt. Die Schutzkappe 2 besitzt ein Zugangsfenster 3, durch welches ohne Entfernung der Schutzkappe 2 sämtliche für den Verbraucher relevanten Bedien- und Anzeigeelemente der Armatur zugänglich und einsehbar sind.

Die auf die Gasflasche 1 aufgeschraubte Armatur besteht unter anderem aus einer Flaschenverschlußvorrichtung 11 mit integriertem Druckminderer und einem Betätigungselement 5, einem Einstellknopf 6 für einen zweiten Druckminderer, einem Manometer 7 für den Druck in der Gasflasche 1 und einem Manometer 8 für den an dem Gasentnahmeanschluß 9 anstehenden Verbrauchsdruck.

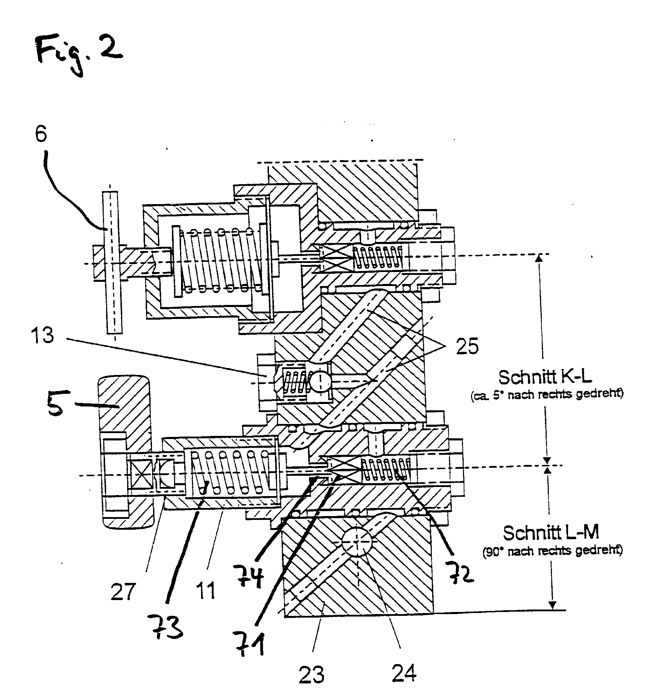

Die Gasarmatur ist in Figur 2 im Detail dargestellt. Figur 2 zeigt einen Schnitt entlang der Linie K-L-M in Figur 1. Der Ventilkörper 23 ist gasdicht in die Flasche 1 geschraubt. Durch den Ventilkörper 23 verläuft entlang der Flaschenachse eine zentrale Bohrung 24, mit der die Flaschenverschlußvorrichtung 11 und das Manometer 7 in Verbindung stehen. Die Bohrung 24 wird in ihrem oberen Bereich durch ein Sicherungsventil abgeschlossen, welches ein unerwünschtes Entweichen von Gas aus der Flasche 1 verhindert.

Die Flaschenverschlußvorrichtung 11 weist ein Betätigungselement 5 auf, mit dem eine in einem steilen Gewinde axial bewegbare Spindel 27 verbunden ist. Die Spindel 27 steht mit einem Schließelement 71 in Wirkverbindung. Das Schließelement 71 wird über die Federn 72 und 73 vorgespannt.

Das Betätigungselement 5 ist als Hebel ausgeführt. Durch Umlegen des Hebels 5 um einen Winkel 12 von 180° wird das Schließelement 71 von der geöffneten in die geschlossene Position gebracht. In letzterer Position wird das Schließelement 71 aufgrund der Federkraft 72 gegen die Dichtfläche zu dem Kanal 74 gedrückt. Eine Beschädigung des Schließelementes 71 durch gewaltsames Betätigen des Hebels 5 ist ausgeschlossen. Sollte bei einem Unfall die Flaschenverschlußvorrichtung 11 abreißen, so wird durch die Feder 72 das Schließelement 71 automatisch in die geschlossene Stellung gebracht.

Im geöffneten Zustand wird das Schließelement 71 von dem Druck des über Kanal 24 aus der Gasflasche einströmenden Hochdruckgases und der Federkraft zweier Federn 72, 73 beaufschlagt. Die Federvorspannungen sind so eingestellt, daß der Gasdruck in der Flasche von 200 oder 300 bar auf etwa 30 bar abgesenkt wird.

Durch Umlegen des Hebels 5 in die Position "Schließen" wird das Schließelement 71 so verschoben, daß der Kanal 74 verschlossen ist. In der Position "Öffnen" gibt das Schließelement 71 dagegen einen bestimmten Querschnitt des Kanals 74 frei, wodurch der Gasdruck entsprechend abgesenkt werden kann. Der Hebel 5 erlaubt somit das Umschalten zwischen den Funktionen "Schließen der Flasche" und "Öffnen der Flasche mit erster Druckreduzierung".

Das Gesamtsystem erhält damit eine zweistufige Druckregelung, wodurch der Verbrauchsdruck genauer geregelt werden kann. Der Einfluß des momentanen Flaschendrucks auf den geregelten Verbrauchsdruck wird im wesentlichen ausgeschalten.

In einer bevorzugten Variante kann die Flaschenverschlußvorrichtung 11 auch mit veränderlicher Druckminderfunktion ausgeführt werden. In diesem Fall kann durch Drehen an dem Hebel 5 die Federvorspannung 73 variiert werden und der Druck des durch den von dem Schließelement 71 freigegebenen Kanal 74 strömenden Gases und somit der Druck des dem Verbraucher zugeführten Gases eingestellt werden.

## Patentansprüche

1. Flaschenverschlußvorrichtung (11) für eine Druckgasflasche (1) mit einem Schließelement (71) und einem Betätigungselement (5) zum Betätigen des Schließelementes (71), wobei das Schließelement (71) in eine die Öffnung der Gasflasche (1) verschließende und eine die Öffnung der Gasflasche freigebende Position bringbar ist, **dadurch gekennzeichnet**, daß in die Flaschenverschlußvorrichtung (11) eine Vorrichtung zur Druckminderung integriert ist, welche mittels des Betätigungselementes (5) aktivierbar ist.

2. Flaschenverschlußvorrichtung nach Anspruch 1, dadurch gekennzeichnet, daß eine Vorrichtung zur Druckminderung auf 10 bis 40 bar, bevorzugt auf 20 bis 30 bar, vorgesehen ist.

3. Flaschenverschlußvorrichtung nach einem der Ansprüche 1 oder 2, dadurch gekennzeichnet, daß die das Schließelement (71) in der die Öffnung der Gasflasche (1) verschließenden Position haltende Kraft unabhängig von der an dem Betätigungselement angreifenden Kraft ist.

4. Flaschenverschlußvorrichtung nach einem der Ansprüche 1 bis 3, dadurch gekennzeichnet, daß das Betätigungselement (5) zwei Einstellpositionen besitzt.

5. Flaschenverschlußvorrichtung nach einem der Ansprüche 1 bis 3, dadurch gekennzeichnet, daß der Grad der Druckminderung mittels des Betätigungselementes (5) einstellbar ist.

6. Flaschenverschlußvorrichtung nach einem der Ansprüche 1 bis 5, dadurch gekennzeichnet, daß der Betätigungswinkel (12) des Betätigungselements (5) nicht mehr als 270°, bevorzugt nicht mehr als 180°, besonders bevorzugt nicht mehr als 150° beträgt.

7. Flaschenverschlußvorrichtung nach einem der Ansprüche 1 bis 6, dadurch gekennzeichnet, daß das Betätigungselement (5) in seinen Endpositionen einrastet.

8. Flaschenverschlußvorrichtung nach einem der Ansprüche 1 bis 7, dadurch gekennzeichnet, daß das Betätigungselement (5) als Drehknopf ausgebildet ist.

9. Gasflaschenarmatur mit einer Flaschenverschlußvorrichtung nach einem der Ansprüche 1 bis 8, dadurch gekennzeichnet, daß mit der Vorrichtung zur Druckminderung eine zweite Vorrichtung zur Druckminderung verbunden ist.
